**Europäisches Patentamt**

**European Patent Office**

**Office européen des brevets**

(19)

(11) **EP 1 124 187 A1**

(12) **EUROPÄISCHE PATENTANMELDUNG**

| | |
|---|---|
| (43) Veröffentlichungstag:<br>**16.08.2001 Patentblatt 2001/33** | (51) Int Cl.[7]: **G06F 17/30** |

(21) Anmeldenummer: **00102651.7**

(22) Anmeldetag: **08.02.2000**

(84) Benannte Vertragsstaaten:
**AT BE CH CY DE DK ES FI FR GB GR IE IT LI LU
MC NL PT SE**
Benannte Erstreckungsstaaten:
**AL LT LV MK RO SI**

(71) Anmelder:
- **Güntzer, Ulrich, Prof. Dr.
82194 Grobenzell (DE)**
- **Balke, Wolf-Tilo
86153 Augsburg (DE)**
- **Kiessling, Werner, Prof. Dr.
86163 Augsburg (DE)**

(72) Erfinder:
- **Güntzer, Ulrich, Prof. Dr.
82194 Grobenzell (DE)**
- **Balke, Wolf-Tilo
86153 Augsburg (DE)**
- **Kiessling, Werner, Prof. Dr.
86163 Augsburg (DE)**

(74) Vertreter: **Dehmel, Albrecht, Dr.
Dehmel & Bettenhausen
Patentanwälte,
Müllerstrasse 1
80469 München (DE)**

(54) **Vorrichtung, Speichermedium und Verfahren zum Ermitteln von Objekten mit grosser
Ähnlichkeit zu einem vorgegebenen Objekt**

(57) Es werden Verfahren beschrieben, mit denen aus einer Vielzahl von Objekten auf effiziente Weise die Objekte ausgesucht werden, die einem Musterobjekt am besten ähneln. Dazu wird die Anzahl der zu betrachtenden Objekte über effizient berechnete Grenzwerte eingeschränkt. Zudem weisen die Verfahren Suchstrategien auf, die die Werte der Eigenschaften der betrachteten Objekte für eine effiziente Suchstrategie nutzen.

Fig. 1

**Beschreibung**

Die Erfindung betrifft Verfahren gemäß dem Oberbegriff des Patentanspruchs 1,2,8,12,13, eine Vorrichtung zur Durchführung der Verfahren und ein von einem Computer lesbares Speichermedium, auf dem die Verfahren abgespeichert sind.

Ein Verfahren zum Ermitteln von Objekten mit großer Ähnlichkeit zu einem vorgegebenen Objekt wird beispielsweise bei der Suche in Informationssystemen eingesetzt. Die Behandlung von Multimediadaten wie Bildern, Video- oder Audiodaten in Informationssystemen, in denen Objekte gesucht werden, die einem vorgegebenen Objekt mit möglichst großer Ähnlichkeit entsprechen, erfordern aufgrund der Komplexität der Daten und der großen Datenmengen besonders effiziente Suchverfahren. Bei einer Suchauswertung in Bezug auf die Ähnlichkeit mit einem vorgegebenen Objekt wird nicht eine Menge von Objekten gefunden, welche genau dem vorgegebenen Objekt entspricht, sondern es wird eine Menge von Objekten ermittelt, die in einem mehr oder weniger hohen Grad der Ähnlichkeit dem vorgegebenen Objekt entsprechen.

Ein entsprechendes Verfahren ist beispielsweise von Fagin, "Combining Fuzzy Information from Multiple Systems", 15th ACM Symposium on Principles of Database Systems, S. 216 bis 226, ACM 1996 bekannt. In diesem Verfahren wird aus einer vorgegebenen Menge von Objekten, die eine vorgegebene Anzahl von Eigenschaften aufweisen, die Anzahl k von Objekten ausgesucht, die einem vorzugebendem Objekt, das im folgenden als Musterobjekt bezeichnet wird, mit vorgegebenen Eigenschaften am besten ähneln. Dazu wird die Datenbank, in der die Objekte mit den Eigenschaften abgelegt sind, durchsucht und es wird für jede Eigenschaft eine Datenliste ermittelt. Die Datenlisten sind nach absteigenden Werten der Eigenschaften sortiert. Die Datenlisten werden auch als atomare Ausgabeströme bezeichnet. Das Musterobjekt wird durch Werte in vorgegebenen Eigenschaften definiert. Zudem wird eine Kombinationsfunktion vorgegeben, mit denen die Werte der Eigenschaften der zu vergleichenden Objekte bewertet werden, um eine Aussage über die ähnlichsten Objekte zu erhalten.

Die Berechnung der Kombinationsfunktion mit den Eigenschaften ergibt für jedes Objekt eine Wertzahl, die im folgenden auch als aggregierter Score bezeichnet wird. Aufgabe des Verfahrens ist es nun, die k Objekte mit den höchsten aggregierten Scores für das vorgegebene Objekt zu ermitteln. Die Suche wird anhand der Datenlisten für die Eigenschaften nach folgendem Verfahren durchgeführt.

A) In einem ersten Schritt werden so viele Objekte jeder Datenliste in einem Speicher abgelegt, bis mindestens eine Anzahl k von gleichen Objekten für jede Eigenschaft abgespeichert ist.

B) In einem zweiten Schritt werden für jedes Objekt, das ausgewählt und im Datenspeicher abgelegt wurde, alle weiteren Eigenschaften durch direkte Zugriffe auf die Datenbank ermittelt. Somit sind nach dem zweiten Schritt alle Werte der Eigenschaften der im Datenspeicher ausgewählten Objekte bekannt.

C) In einem dritten Schritt werden die aggregierten Scores $S(x) = F(s_1(x), ..., s_n(x))$ für jedes Objekt x ermittelt, wobei mit $s_i(x)$ der Wert der Eigenschaft i des Objektes x und mit F die Kombinationsfunktion bezeichnet ist und die Laufvariable i eine natürliche Zahl ist, die folgende Bedingung erfüllt: $1 \leq 1 \leq n$.

D) Anschließend werden in einem vierten Schritt die k Objekte ausgesucht und als Ergebnis ausgegeben, die die größten aggregierten Scores aufweisen.

Das Verfahren nach Fagin ist relativ zeitaufwendig, da eine große Anzahl von Objekten ausgewählt werden muß und für alle Objekte direkte Zugriffe auf die bisher unbekannten Eigenschaften -der Objekte erfolgen müssen. Die direkten Zugriffe sind insbesondere bei heterogenen Informationssystemen relativ zeit- und kostenaufwendig.

Die Aufgabe der Erfindung besteht darin, ein effizienteres und schnelleres Verfahren zum Ermitteln von Objekten bereitzustellen, die einem vorgegebenen Objekt am besten ähneln.

Die Aufgabe der Erfindung wird durch die Merkmale der unabhängigen Ansprüche gelöst.

Ein Vorteil der Erfindung nach Anspruch 1 besteht darin, daß die Wertzahl der Objekte mit einer Vergleichszahl verglichen wird und dadurch auf einfache und effiziente Weise die Anzahl der zu betrachtenden Objekte eingeschränkt wird.

Ein Vorteil der Erfindung nach Anspruch 2 besteht darin, daß nur die Objekte betrachtet werden, deren Werte für die betrachteten Eigenschaften über einem ermittelten Grenzwert liegen. Auch dadurch wird die Anzahl der zu überprüfenden Objekte effektiv eingeschränkt.

Auf diese Weise werden effiziente und schnelle Verfahren zur Ermittlung von k Objekten mit größter Ähnlichkeit zu einem vorgegebenen Objekt erreicht, da weniger Objekte ausgewertet werden müssen.

Weitere vorteilhafte Ausbildungen der Erfindung sind in den abhängigen Ansprüchen angegeben.

Ein besonders effizientes Verfahren wird dadurch erreicht, daß die Vergleichszahl mit der Kombinationsfunktion unter Verwendung der kleinsten Werte der Eigenschaften der ausgewählten Objekte berechnet wird.

Eine weitere Verbesserung der Verfahren wird dadurch erreicht, daß die Werte der Eigenschaften eines ausgewählten Objektes, die noch nicht ausgewählt wurden, durch die kleinsten Werte abgeschätzt werden, die für die entsprechenden Eigenschaften bereits ausgewählt wurden.

Die Erfindung wird im folgenden anhand der Figuren näher erläutert:

Es zeigen:

Fig. 1 einen schematischen Aufbau eines Informationssystems,
Fig. 2 Datenlisten für die Eigenschaften,
Fig. 3 ein Ablaufdiagramm für einen ersten Algorithmus,
Fig. 4 eine Datenliste für die Eigenschaft Textur,
Fig. 5 eine Datenliste für die Eigenschaft Farbe,
Fig. 6 eine Zugriffsliste,
Fig. 7 eine Ergebnisliste,
Fig. 8 ein Ablaufdiagramm für einen zweiten Algorithmus,
Fig. 9 eine weitere Datenliste für die Eigenschaft Textur,
Fig. 10 eine weitere Datenliste die Eigenschaft Farbe,
Fig. 11 eine weitere Zugriffsliste,
Fig. 12 eine aggregierte Score-Liste,
Fig. 13 ein Ablaufdiagramm für einen dritten Algorithmus,
Fig. 14 eine dritte Datenliste für die Eigenschaft Textur,
Fig. 15 eine dritte Datenliste für die Eigenschaft Farbe,
Fig. 16 eine Zugriffsstruktur,
Fig. 17 eine einmal erweiterte Zugriffsstruktur,
Fig. 18 eine zweimal erweiterte Zugriffsstruktur,
Fig. 19 eine dreimal erweiterte Zugriffsstruktur,
Fig. 20 eine Ergebnisstruktur,
Fig. 21 eine Ergebnisliste,
Fig. 22 ein Ablaufdiagramm für ein viertes Verfahren,
Fig. 23 eine weitere Datenliste für die Eigenschaft Textur,
Fig. 24 eine weitere Datenliste für die Eigenschaft Farbe,
Fig. 25 eine Zugriffsstruktur und
Fig. 26 eine Ergebnisstruktur,

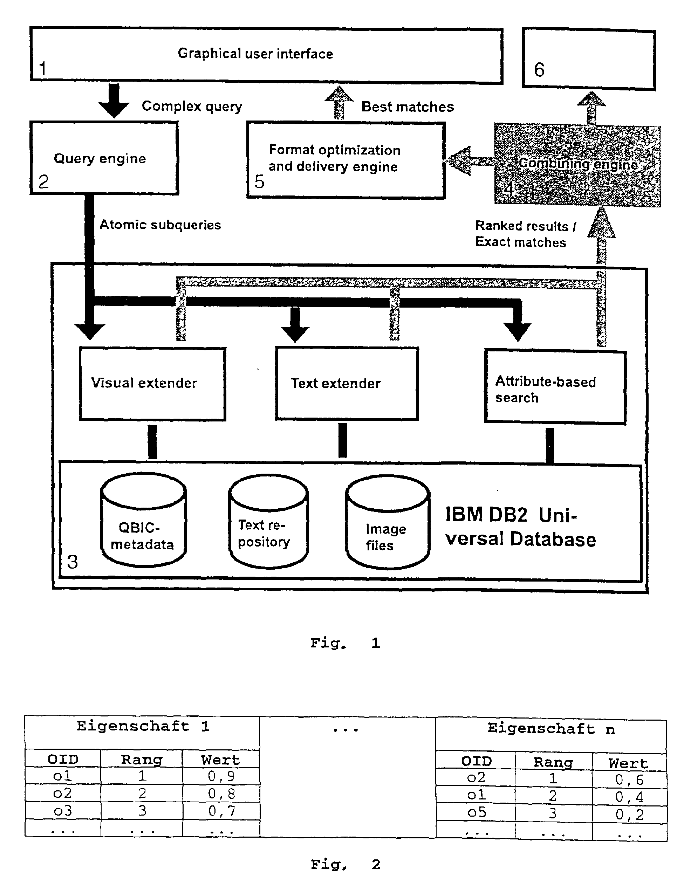

Fig. 1 zeigt als Beispiel ein Informationssystem auf der Grundlage eines Datenbanksystems, das als Heron-System bezeichnet wird und bei dem das erfindungsgemäße Verfahren realisiert ist. Vorzugsweise ist das Informationssystem in Form eines Computersystems realisiert, wobei die Verfahren zur Ermittlung der ähnlichsten Objekte vorzugsweise automatisch ablaufen. Das Informationssystem weist eine Ein/Ausgabeeinrichtung 1 auf, die vorzugsweise als graphische Benutzeroberfläche ausgebildet ist.

Die Ein-/Ausgabeeinrichtung 1 steht mit einer Suchmaschine 2 in Verbindung. Die Suchmaschine 2 greift auf die Datenbank 3 zu, die einen visuellen Extender, einen Textextender und ein attribut-basiertes Suchsystem aufweist. Der visuelle Extender, der Textextender und das attribut-basierte Suchsystem stellen Programmblöcke dar, in denen z.B. Programme zur Farberkennung, Texturerkennung, Texterkennung oder Internetrecherche abgespeichert sind.

Weiterhin ist eine Auswahleinrichtung 4 vorgesehen, die mit einem Datenspeicher 6 und mit der Datenbank 3 in Verbindung steht. Die Auswahleinrichtung 4 steht mit einer Formatiereinrichtung 5 in Verbindung, die wiederum an die Ein/Ausgabeeinrichtung 1 angeschlossen ist.

Das Informationssystem nach Fig. 1 funktioniert wie folgt: Über die Ein-/Ausgabeeinrichtung 1 wird das Objekt eingegeben, zu dem ähnliche Objekte gesucht werden, und das im folgenden als Musterobjekt bezeichnet ist. Das Objekt wird als Musterobjekt bezeichnet, da es als Suchmuster für den Vergleich mit den zu überprüfenden Objekten dient. Dabei werden beispielsweise die Eigenschaften des Objektes und die Kombinationsfunktion eingegeben, mit der die Eigenschaften der Objekte beim Vergleich bewertet werden. Das Objekt ist jedoch nicht auf bildliche Muster beschränkt, sondern kann jede Art von Form oder Information darstellen.

Die Suchmaschine 2 ermittelt für jede Eigenschaft, die für das vorgegebene Objekt (Musterobjekt) als Suchkriterium festgelegt wurde, eine Datenliste aus der Datenbank unter Verwendung der Programmblöcke visueller Extender, Textextender und attribut-basiertes Suchsystem. Die angegebenen Programmblöcke stellen nur Beispiele dar. Ein Fachmann wird für das erfindungsgemäße Verfahren die Programme verwenden, die für die Suche am besten geeignet sind. In jeder Datenliste sind die Objekte nach dem Wert der Eigenschaft sortiert aufgelistet. Die Datenlisten und die vorgegebene Kombinationsfunktion F werden an die Auswahleinrichtung 4 ausgegeben und im Datenspeicher 6 abgelegt.

Die Auswahleinrichtung 4 ermittelt unter Verwendung der Datenlisten und der Kombinationsfunktion F die vorgegebene Anzahl von Objekten, die am ehesten dem vorgegebenen Objekt (Musterobjekt) entsprechen. Die vorgegebene Anzahl von besten Objekten wird von der Auswahleinrichtung 4 an die Formatiereinrichtung 5 weitergegeben, die diese nach einem vorgegebenen Format aufbereitet und über die Ein/Ausgabeeinrichtung 1 ausgibt. Die

einzelnen Funktionsblöcke der Figur 1 können auch in Form von Programmen und/oder elektronischen Schaltungen realisiert werden.

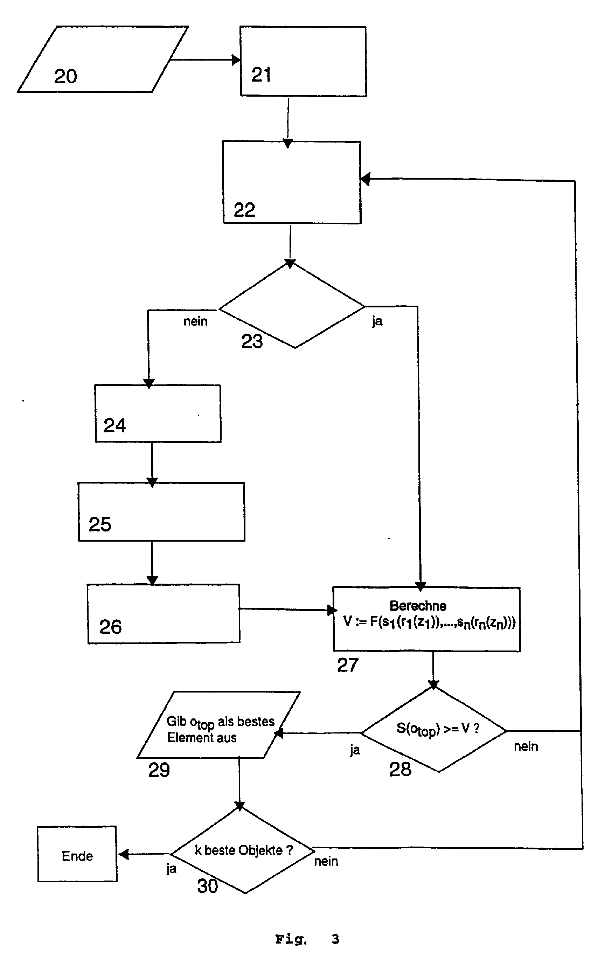

Fig. 2 zeigt ein Beispiel für Datenlisten 12,13 für die Eigenschaften 1 bis n. In einer ersten Datenliste 12 ist in einer ersten Spalte eine Kennung OID für die Objekte, in einer zweiten Spalte der Rang des Objektes innerhalb der Datenliste und in einer dritten Spalte der Wert der Eigenschaft des Objektes abgelegt. Die Objekte sind in den Datenlisten der einzelnen Eigenschaften in der Weise sortiert angeordnet, daß das Objekt mit dem größten Wert auf dem ersten Rang steht und die weiteren Objekte nach absteigendem Wert auf die weiteren Ränge verteilt sind.

Fig. 3 zeigt ein Ablaufdiagramm eines ersten Algorithmus, mit dem aus einer vorgegebenen Menge von Objekten eine vorgegebene Anzahl von Objekten ausgesucht wird, die am besten auf ein vorgegebenes Objekt (Musterobjekt) mit vorgegebenen Eigenschaften passen, ohne die gesamte Datenbasis durchsuchen zu müssen. Bei diesem Verfahren werden direkte Zugriffe auf die Daten der Datenbank weitgehend vermieden, so daß das Verfahren schnell und kostengünstig auszuführen ist.

Bei Programmpunkt 20 werden für das vorgegebene Objekt, das im folgenden als Musterobjekt bezeichnet wird, n Eigenschaften und eine Kombinationsfunktion F in die Ein/Ausgabeeinrichtung 1 eingegeben. Die Eigenschaften und die Kombinationsfunktion können frei festgelegt werden. Vorzugsweise werden die Eigenschaften abhängig vom Musterobjekt in der Weise festgelegt, daß die Eigenschaften des Musterobjektes ausgesucht werden, die das Musterobjekt am besten beschreiben. Auch die Kombinationsfunktion F wird vorzugsweise in der Weise festgelegt, daß die prägenderen Eigenschaften des Musterobjektes höher bewertet werden als die weniger prägenden Eigenschaften.

Daraufhin ermittelt die Suchmaschine 2 aus der Datenbank 3 bei Programmpunkt 21 für jede eingegebene Eigenschaft eine Datenliste entsprechend Fig. 2, in der die Objekte nach absteigendem Wert sortiert aufgelistet sind.

Anschließend wählt die Auswahleinrichtung 4 bei Programmpunkt 22 das Objekt mit dem größten Wert der Eigenschaft, das noch nicht für diese Eigenschaft ausgewählt wurde, aus einer ersten Datenliste aus und speichert den Wert der Eigenschaft mit der Kennung OID des Objektes für die betrachtete Eigenschaft in einer Ergebnisliste im Datenspeicher 6 ab.

Daraufhin überprüft die Auswahleinrichtung 4 bei Programmpunkt 23, ob alle zu betrachtenden Eigenschaften des bei Programmpunkt 22 ausgewählten Objektes schon in der Ergebnisliste abgelegt sind. Ist dies nicht der Fall, so ermittelt die Auswahleinrichtung 4 bei Programmpunkt 24 durch einen direkten Zugriff auf die Datenbank 3 alle nicht bekannten Eigenschaften des ausgewählten Objektes. Die aus der Datenbank 3 ermittelten Eigenschaften des ausgewählten Objektes werden ebenfalls in der Ergebnisliste abgelegt.

Anschließend berechnet die Auswahleinrichtung 4 bei Programmpunkt 25 eine Wertzahl S (aggregierter Score) für das ausgewählte Objekt o nach folgender Formel:

$$S(o) = F(s_1(o), .... s_n(o)).$$

Wobei mit $s_i$ der Wert des Objektes o für die Eigenschaft i bezeichnet ist ($1 \leq i \leq n$).

Die Kombinationsfunktion F besteht beispielsweise aus dem arithmetischen Mittel der Werte aller betrachteten Eigenschaften des Musterobjektes, wenn diese das Musterobjekt gleich stark charakterisieren. Die Wertzahl des Objektes wird ebenfalls in die Ergebnisliste im Datenspeicher 6 eingetragen.

Daraufhin wählt die Auswahleinrichtung 4 bei Programmpunkt 26 aus der Ergebnisliste im Datenspeicher 6 das Objekt $o_{top}$ aus, das die größte Wertzahl aufweist.

Anschließend berechnet die Auswahleinrichtung 4 bei Programmpunkt 27, eine Vergleichszahl V nach folgender Formel:

$$V = F(s_1 (r_1 (z_1)), ..., s_n (r_n (z_n))),$$

wobei mit F die Kombinationsfunktion, mit $s_i$ die i-te Eigenschaft und mit $r_i (z_i)$ der kleinste Wert der i-ten Eigenschaft bezeichnet ist, der in der Ergebnisliste im Datenspeicher 6 abgelegt ist ($1 \leq i \leq n$) und somit der Auswahleinrichtung bekannt ist.

Beim folgenden Programmpunkt 28 vergleicht die Auswahleinrichtung 4, ob die Wertzahl des Objektes mit maximaler Wertzahl, die im Datenspeicher 6 in der Ergebnisliste abgelegt ist, größer gleich der Vergleichszahl V ist.

$$S(o_{top}) \geq V = F(S_1(r_1(Z_1)),...,S_n(r_n(Z_n)))$$

Ist dies der Fall, so gibt die Auswahleinrichtung 4 bei Programmpunkt 29 dieses Objekt als Objekt mit größter Ähnlichkeit zu dem vorgegebenen Objekt über die Formatiereinrichtung 5 aus. Anschließend überprüft die Auswahleinrichtung 4 bei Programmpunkt 30, ob die vorgegebene Anzahl k von besten Objekten ausgegeben wurde. Ist dies der Fall, dann endet das Programm. Ist es nicht der Fall, dann wird zu Programmpunkt 22 zurück verzweigt und das Programm erneut durchlaufen.

Ergibt die Abfrage bei Programmpunkt 23, daß bereits alle Eigenschaften des bei Programmpunkt 22 ausgewählten Objektes o in der Ergebnisliste des Datenspeichers 6 abgelegt sind, dann wird direkt zu Programmpunkt 27 verzweigt.

Ergibt die Abfrage bei Programmpunkt 28, daß die Wertzahl des Objektes mit der maximalen Wertzahl nicht größer gleich der Vergleichszahl V ist, dann wird zu Programmpunkt 22 zurück verzweigt und der Programmablauf erneut durchlaufen.

Der Ablauf des ersten Algorithmus nach Fig. 3 wird im folgenden anhand eines Datenbeispiels näher erläutert. In dem beschriebenen Beispiel soll ein bestes Objekt der Datenbank (k = 1) für ein vorgegebenes Bild ermittelt werden. Die Eigenschaften des Bildes, die zur Suche verwendet werden, sind die Textur und die Farbe Rot des vorgegebenen Bildes (Musterobjekt). Als Kombinationsfunktion F wird das arithmetische Mittel der beiden Eigenschaften verwendet, da sowohl die Farbe als auch die Textur das Musterobjekt gleich stark prägen:

$$F(s_1(o),s_2(o)) = (s_1(o) + s_2(o))/2.$$

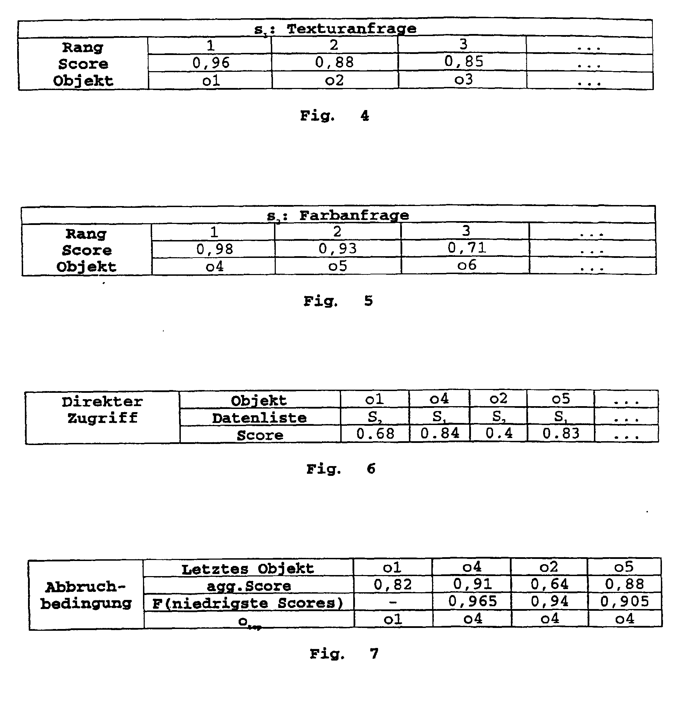

In Fig. 4 und in Fig. 5 sind die Datenlisten dargestellt, die in diesem Beispiel von der Suchmaschine 2 aus der Datenbank 3 ermittelt und an die Auswahleinrichtung 4 geliefert werden. Die Datenliste $s_1$ der Figur 4 stellt eine Liste von Objekten dar, die nach der Eigenschaft Textur mit absteigendem Wert sortiert sind. Die Datenliste $s_2$ der Figur 5 stellt eine Liste von Objekten dar, die nach der Eigenschaft Farbe mit absteigendem Wert sortiert sind. Das erste, zweite, dritte, vierte, fünfte, sechste usw. Objekt ist mit der Kennung OID $o_1$, $o_2$, $o_3$, $o_4$, $o_5$, $o_6$ usw. bezeichnet. Die zu vergleichende Farbe ist in diesem Beispiel die Farbe Rot und die zu vergleichende Textur eine definierte Schraffierung oder Musterung.

Es wird nun zuerst das Objekt $o_1$ entsprechend Programmpunkt 22 ausgewählt. Die Abfrage bei Programmpunkt 23 ergibt, daß das Objekt $o_1$ in den ersten drei betrachteten Objekten der zweiten Datenliste $s_2$ nicht bekannt ist. Folglich wird nach Programmpunkt 24 über einen direkten Zugriff auf die Datenbank 3 der Wert der Eigenschaft Farbe für das Objekt $o_1$ ermittelt. Dies wird ebenfalls für die Objekte $o_2$, $o_3$, $o_4$, $o_5$, $o_6$ in analoger Weise durchgeführt. Es werden jeweils über direkte Zugriffe auf die Datenbank 3 die Werte der fehlenden Eigenschaften ermittelt. Die Werte der Objekte, die bei den direkten Zugriffe aus der Datenbank ermittelt werden, sind in Fig. 6 dargestellt. Die Zugriffsliste wird im Datenspeicher 6 von der Auswahleinrichtung 4 abgelegt.

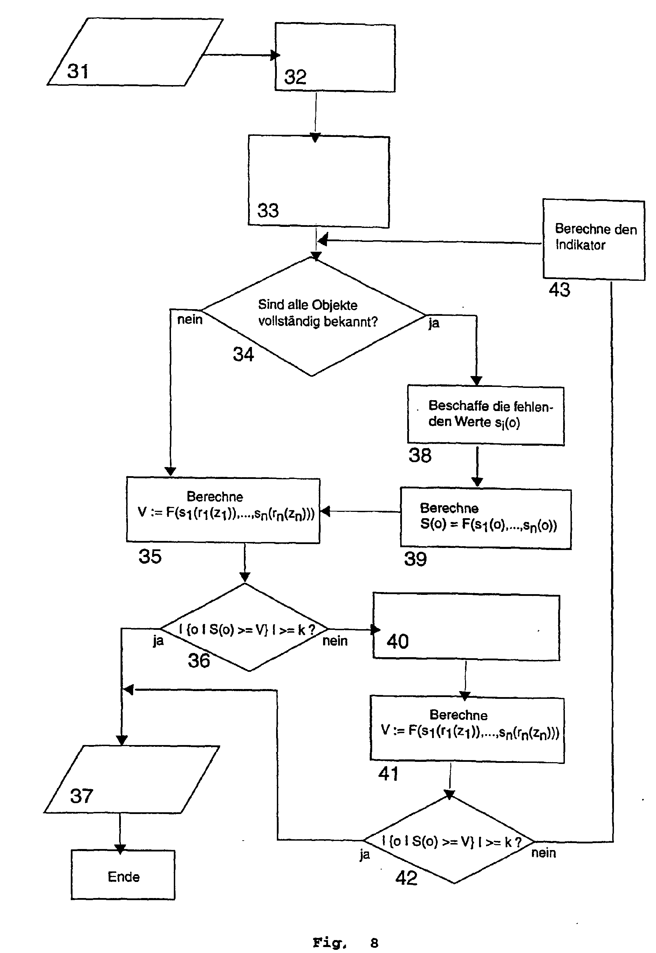

Die Werte der Eigenschaften werden für das erste, das vierte, das zweite und das fünfte Objekt $o_1$, $o_4$, $o_2$ und $o_5$ in der Ergebnisliste abgespeichert. Aus den Werten der Eigenschaften werden die Wertzahlen (aggregierten Scores) nach Programmpunkt 25 berechnet und in der Ergebnisliste entsprechend Fig. 7 im Datenspeicher 6 abgelegt.

Vor der Auswertung des fünften Objektes o5 hat die Abfrage bei Programmpunkt 28 immer ergeben, daß die Wertzahl des Objektes $S(o_{top})$ mit maximaler Wertzahl (aggregierter Score), die in der Ergebnisliste abgelegt ist, kleiner als die Vergleichszahl V ist. Somit wurde immer wieder zu Programmpunkt 22 zurückverzweigt.

Nach der Auswertung des Objektes o5, wird das Objekt $o_4$ bei Programmpunkt 26 als Objekt mit maximaler Wertzahl (aggregierter Score) ausgewählt, wobei die Wertzahl den Wert 0.91 aufweist. Anschließend wird nach Programmpunkt 27 die Vergleichszahl V ermittelt:

$$V = F(s_1 (r_1 (z_1)), ..., s_n (r_n (Z_n))),$$

$$V = F (s_1(o2),s_2(o5)) = (s_1(o2) + s_2(o5))/2 = 0{,}905.$$

Anschließend wird bei Programmpunkt 28 die Wertzahl des Objektes o4 mit der Vergleichszahl V verglichen und festgestellt, daß $S(o4) > V$ ist.

Somit wird nach Programmpunkt 29 verzweigt und das vierte Objekt o4 als das Objekt ausgegeben, das am besten zu dem vorgegebenen Objekt passt. Im folgenden Programmpunkt wird festgestellt, daß mit k = 1 alle k Objekte ausgegeben wurden und das Programm endet.

Ein zweiter Algorithmus zur Ermittlung ähnlicher Objekte ist anhand eines Ablaufdiagramms in Figur 8 dargestellt. Der zweite Algorithmus ermöglicht ein besonders effizientes Verfahren zur Ermittlung einer vorgegebenen Anzahl k von Objekten, die am besten zu einem vorgegebenen Objekt passen.

Bei Programmpunkt 31 werden für ein Musterobjekt, zu dem ähnliche Objekte gesucht werden, n vorgebbare Eigenschaften und eine vorgebbare Kombinationsfunktion F über die Ein/Ausgabeeinrichtung 1 eingegeben. Das Musterobjekt, die n Eigenschaften und die Kombinationsfunktion F entsprechen denen des ersten Algorithmus nach Figur 3.

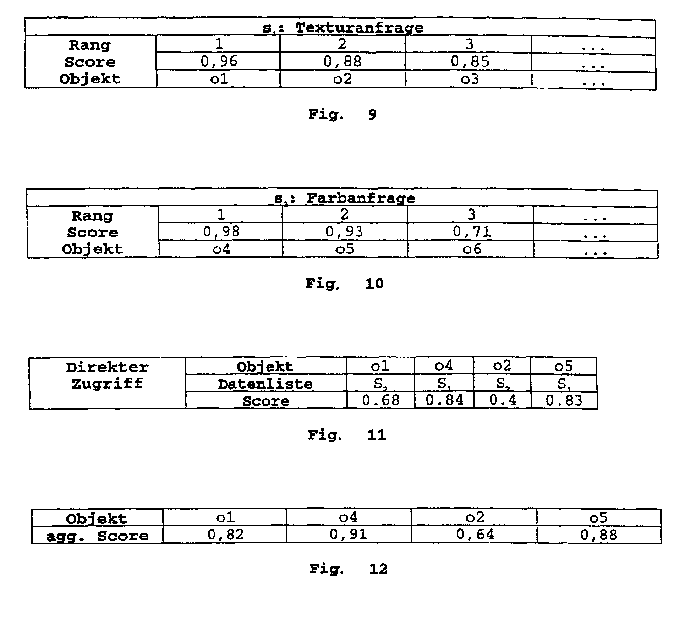

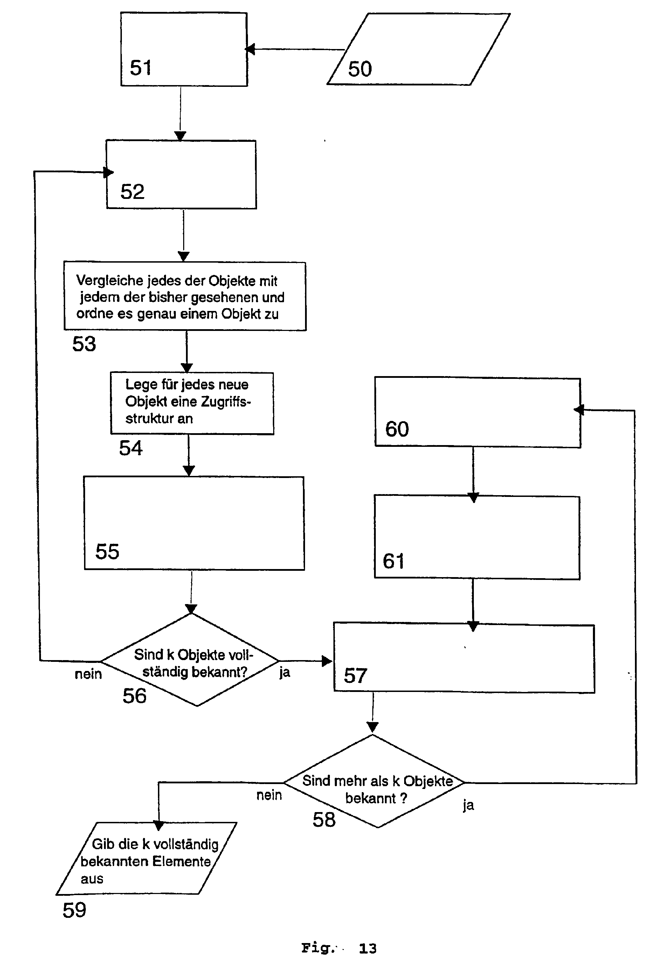

Daraufhin ermittelt die Suchmaschine 2 aus der Datenbank 3 bei Programmpunkt 32 für die Eigenschaften Textur und Farbe jeweils eine Datenliste, die in den Figuren 9 und 10 dargestellt sind. Die Objekte sind in den Datenlisten nach absteigendem Wert sortiert aufgelistet und die Datenlisten werden der Auswahleinrichtung 4 zugeführt.

Die Auswahleinrichtung 4 wählt beim folgenden Programmpunkt 33 jeweils die zwei Objekte mit den höchsten Werten aus den zwei Datenlisten aus und speichert die Kennung der Objekte mit den Werten für die Eigenschaften im Datenspeicher 6 in einer Ergebnisliste ab. Anstelle der zwei Objekte kann auch eine andere Zahl p von Objekten ausgewählt werden. Die optimale Zahl p wird vom Fachmann abhängig vom Anwendungsfall ermittelt.

Anschließend berechnet die Auswahleinrichtung 4 einen Indikator für jede Datenliste, wobei der Indikator den Gradienten bezeichnet, mit dem der Wert der Eigenschaften über die Anzahl der Objekte fällt. Dazu werden nur die Objekte berücksichtigt, die in der Ergebnisliste abgelegt sind. Für die erste Datenliste (Fig.9) ergibt sich ein erster Indikator I1: I1 = 0,5*(0,96-0,88) = 0,04. Für die zweite Datenliste (Fig.10) ergibt sich ein zweiter Indikator I2: I2 = 0,5 (0,98-0,93) = 0,025.

Weil die Gewichte in der Kombinationsfunktion $F$ (z.B. ein gewichtetes arithmetisches Mittel) ausgedrückt werden können, ist ein einfaches Maß für den Indikator jeder Datenliste die partielle Ableitung der Kombinationsfunktion $\delta F/\delta x_i$. So kann im gewichteten Fall ein Indikator $I_i$ für jede Datenliste, die mehr als $p$ Elemente enthält, wie folgt errechnet werden:

$$I_i = \delta F/\delta x_i * (s_i(r_i(z_i\text{-}p))\text{-}s_i(r_i(z_i)))$$

Anschließend überprüft die Auswahleinrichtung 4 bei Programmpunkt 34, ob alle Eigenschaften der Objekte, deren Kennungen in der Ergebnisliste abgelegt sind, bekannt sind. Ist dies der Fall, so wird anschließend bei Programmpunkt 35 die Vergleichszahl V nach folgender Formel berechnet:

$$V = F(s_1 (r_1 (z_1)), ..., s_n (r_n (z_n)),$$

wobei mit F die Kombinationsfunktion, mit $s_i$ die i-te Eigenschaft und mit $r_i (z_i)$ der kleinste Wert der i-ten Eigenschaften bezeichnet ist ($1 \leq i \leq n$), der in der Ergebnisliste im Datenspeicher 6 abgelegt und somit der Auswahleinrichtung bekannt ist.

Daraufhin berechnet die Auswahleinrichtung bei Programmpunkt 36 die Wertzahlen S (aggregierter Score) für die Objekte o der Ergebnisliste nach folgender Formel:

$$S(o) = F((s_1(o), ..., s_n(o)).$$

Wobei mit $s_i$ der Wert des Objektes o für die Eigenschaft i ($1 \leq i \leq n$) und mit F eine Kombinationsfunktion bezeichnet ist, die in diesem Beispiel das arithmetische Mittel der Werte der Objekte darstellt. Anschließend vergleicht die Auswahleinrichtung 4 die Objekte, die in der Ergebnisliste abgelegt sind, dahingehend, ob die Wertzahl S von k Objekten der Ergebnisliste größer gleich der Vergleichszahl V sind.

$$\left| \left\{ o \mid S(o) \geq F(s_1(r_1 (z_1)),...,s_n(r_n (z_n))) \right\} \right| \geq k$$

Ist dies der Fall, so gibt die Auswahleinrichtung 4 bei Programmpunkt 37 die k Objekte mit den besten Wertzahlen über die Formatiereinrichtung 5 als Ergebnis an die Ein/Ausgabeeinrichtung 1 aus. Anschließend endet das Programm.

Ergibt die Abfrage bei Programmpunkt 34, daß nicht alle Eigenschaften der in der Ergebnisliste angegebenen Objekte bekannt sind, dann werden anschließend bei Programmpunkt 38 von der Auswahleinrichtung 4 durch direkte Zugriffe auf die Datenbank 3 die fehlenden Eigenschaften ermittelt und in der Ergebnisliste abgelegt. Die Ergebnisse der direkten Zugriffe sind in der Zugriffsliste der Figur 11 dargestellt, die im Datenspeicher 6 abgelegt wird.

Daraufhin berechnet die Auswahleinrichtung 4 bei Programmpunkt 39 für jedes Objekt o die Wertzahl S(o) (aggregierter Score) und legt diese in der Ergebnisliste ab. Figur 12 zeigt die Wertzahlen der Ergebnisliste. Anschließend wird nach Programmpunkt 35 verzweigt.

Ergibt die Abfrage bei Programmpunkt 36, daß nicht die Wertzahl von k Objekten größer gleich der Vergleichszahl V ist, so wird anschließend bei Programmpunkt 40 von der Auswahleinrichtung 4 aus der Datenliste mit dem niedrigsten Indikator das Objekt mit dem grössten Wert ausgewählt, das aus dieser Datenliste noch nicht ausgewählt wurde (Programmpunkt 33, Programmpunkt 40), und in der Ergebnisliste abgelegt.

Daraufhin wird bei Programmpunkt 41 von der Auswahleinrichtung 4 die Vergleichszahl V unter Berücksichtigung des gerade neu ausgewählten Objektes neu berechnet.

Bei der folgenden Abfrage bei Programmpunkt 42 wird überprüft, ob die Wertzahl $S(o)$ von k Objekten der Ergebnisliste größer gleich der Vergleichszahl V ist. Ist dies der Fall, so wird zu Programmpunkt 37 verzweigt. Ist dies nicht der Fall, so wird beim folgenden Programmpunkt 43 der Indikator für die Datenliste neu berechnet, aus der bei Programmpunkt 40 das neue Objekt ausgewählt wurde. Anschließend wird zu Programmpunkt 34 verzweigt.

Der zweite Algorithmus weist eine Effizienzsteigerung gegenüber dem ersten Algorithmus auf. Durch das zweimalige Auswerten der Abbruchbedingung sind weniger direkte Zugriffe notwendig. Zudem werden bei der Auswahl neuer Objekte, die in die Ergebnisliste aufgenommen werden, durch die Auswahl der Datenliste, die den größten Indikator I aufweist, sehr schnell die k besten Objekte ermittelt. Dieser Effekt rührt daher, daß die Wahrscheinlichkeit, daß die Vergleichszahl V mit einem Objekt aus der Datenliste mit großem Indikator schnell kleiner wird, größer ist als bei einem Objekt aus einer Datenliste mit einem kleinem Indikator.

Im folgenden wird der Programmablauf der Fig. 8 an einem Beispiel näher erläutert: In den Figuren 9 und 10 sind die zwei Datenlisten dargestellt, die die Suchmaschine 2 aus der Datenbank 3 ermittelt und der Auswahleinrichtung 4 bei Programmpunkt 32 zur Verfügung stellt. Bei Programmpunkt 33 werden die Objekte o1,o2,o4 und o5 von der Auswahleinrichtung 4 ausgewählt und mit den Werten (Score) im Datenspeicher 6 abgelegt.

Da nicht alle Eigenschaften bekannt sind, müssen nach Programmpunkt 38 die fehlenden Eigenschaften von der Auswahleinrichtung 4 über direkte Zugriffe auf die Datenbank 3 gesucht werden. Das Ergebnis der direkten Zugriffe ist in Figur 11 dargestellt.

Aus den nun vollständig bekannten Eigenschaften der Objekte berechnet die Auswahleinrichtung 4 nach Programmpunkt 39 die jeweilige Wertzahl S (aggregierter Score) der Objekte und legt diese in einer Ergebnisliste entprechend Figur 12 im Datenspeicher 6 ab.

Jetzt kann die Abbruchbedingung nach Programmpunkt 35 mit der Vergleichszahl V ausgewertet werden, die für jede Eigenschaft in der Ergebnisliste abgespeichert ist. Weil die Datenlisten sortiert sind, weisen die niedrigsten Werte die Objekte auf, die zuletzt aus den Datenlisten ausgewählt wurden: Also hier die Objekte o2 und o5 : Somit wird die Vergleichszahl folgendermaßen berechnet:

$$V = F(s_1(r_1(z_1)), s_2(r_2(z_2))) = F(s_1(o2), s_2(o5)) = 0.905.$$

Die Abfrage bei Programmpunkt 36 ergibt, daß die Menge der Objekte mit einer Wertzahl S (aggregierter Score) $\geq$ Vergleichszahl V nur aus einem einzigen Objekt, nämlich dem Objekt o4, besteht. Es erfolgt also kein Abbruch.

Deshalb muß die Ergebnisliste bei Programmpunkt 40 erweitert werden. Dazu wird ein Objekt aus der Datenliste geholt, die den größeren Indikator aufweist. In diesem Fall aus der Datenliste $s_1$. Das nächste Objekt in der Datenliste $s_1$, das noch nicht aus dieser Datenliste ausgelesen wurde und jetzt ausgelesen wird, ist das Objekt o3 mit einem Wert $s_1(o3)$ von 0.85. Die neuen minimalen Werte der beiden Ergebnislisten liefern somit bei Programmpunkt 41 für die Vergleichszahl V den Wert:

$$V = F(s_1(r_1(z_1)), s_2(r_2(z_2))) = F(s_1(o3), s_2(o5)) = 0.89.$$

Die Abfrage bei Programmpunkt 42 ergibt, daß nur das Objekt o4 eine Wertzahl größer gleich der Vergleichszahl V hat.

Somit ist die Bedingung der Abfrage bei Programmpunkt 42 nicht erfüllt und es wird zu Programmpunkt 43 verzweigt.

Bei Programmpunkt 43 wird für die Datenliste $s_1$ ein neuer Indikator $I_1 = 0.5 * (0.88 - 0.85) = 0.15$ berechnet und anschließend zu Programmpunkt 34 verzweigt.

Bei Programmpunkt 34 muß für das Objekt o3 ein direkter Zugriff gemacht werden: $s_2(o3) = 0.7$ und die Wertzahl $S(o3)$ für das Objekt o3 berechnet werden: $S(o3) = 0.775$.

Die Abfrage bei Programmpunkt 36 wird wieder nicht mit ja beantwortet, da lediglich das Objekt o4 eine größere Wertzahl als die Vergleichszahl V ($V = F(s_1(o3), s_2(o5)) = 0.89$) aufweist.

Daraufhin wird bei Programmpunkt 40 erneut ein neues Objekt mit dem größten Wert aus einer Datenliste in die Ergebnisliste geladen. Diesmal hat die Datenliste $s_2$ den größeren Indikator. Folglich wird Objekt o6 mit einem Wert $s_2(o6) = 0.71$ in die Ergebnisliste aufgenommen, da das Objekt o6 noch nicht aus der Datenliste $s_2$ ausgelesen wurde.

Die minimalen Scores in den Strömen sind jetzt $s_1(o3)$ und $s_2(o6)$ und damit $F(s_1(o3), s_2(o6)) = 0.78$ für die Abfrage bei Programmpunkt 42. Jetzt gibt es mehr als $k$ (k=2), d.h. zwei Objekte, die eine größere Wertzahl haben, nämlich die Objekte o4, o5 und o1.

Daraufhin wird zu Programmpunkt 37 verzweigt und die Objekte o4 und o5 als beste Objekte der gesamten Datenbank ausgegeben.

Figur 13 zeigt ein Ablaufdiagramm eines dritten Algorithmus zum Ermitteln von k Objekten, die einem vorgegebenen Objekt (Musterobjekt), das durch n Eigenschaften charakterisiert ist, am besten ähneln. Wieder wird eine Kombinationsfunktion F verwendet, mit der die Eigenschaften für den Vergleich der Objekte mit dem Musterobjekt bewertet werden.

Bei Programmpunkt 50 werden für das vorgegebene Objekt die n Eigenschaften und die Kombinationsfunktion F über die Ein-/Ausgabeeinrichtung 1 eingegeben. Die n Eigenschaften werden beispielsweise zuvor bei einer Analyse des Musterobjektes ermittelt. Hierbei kann jede Kombinationsfunktion F verwendet werden. In diesem Beispiel entsprechen das vorgegebene Objekt, die vorgegebenen Eigenschaften und die Kombinationsfunktion F denen des ersten Algorithmus nach Figur 3.

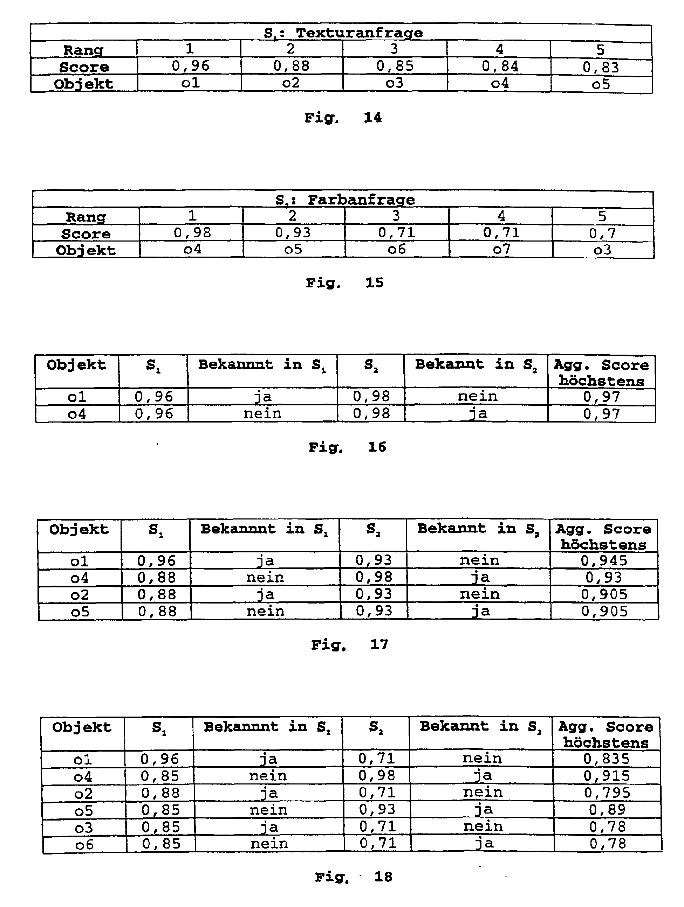

Die Suchmaschine 2 ermittelt aus der Datenbank 3 bei Programmpunkt 51 für die Eigenschaften Textur und Farbe jeweils eine Datenliste, die in den Figuren 14 und 15 dargestellt sind. Die Werte der Eigenschaften der Objekte sind nach absteigendem Wert sortiert aufgelistet. Die Datenlisten werden der Auswahleinrichtung 4 zugeführt.

Bei Programmpunkt 52 wählt die Auswahleinrichtung 4 aus den zugeführten Datenlisten eine vorgegebene Anzahl m von Werten jeder Datenliste aus, die die größten Werte der Datenliste darstellen, und die noch nicht in die Ergebnisliste eingeschrieben wurden. Die ausgewählten Werte werden mit den dazugehörigen Eigenschaften und Kennungen der Objekte in der Ergebnisliste im Datenspeicher 6 abgelegt.

Beim folgenden Programmpunkt 53 vergleicht die Auswahleinrichtung 4 die neu ausgewählten Objekte mit jedem der Objekte, für die bereits in der Ergebnisliste Werte abgelegt sind und entscheidet, welche Objekte identisch sind. Diese Überprüfung ist insbesondere bei heterogenen Informationssystemen notwendig, bei denen nicht eindeutig eine Zuordnung der Objekte aus den verschiedene Datenlisten über die Kennung der Objekte möglich ist. Der Abgleich der Objekte wird nach bekannten Verfahren durchgeführt, die beispielsweise von W. Cohen in "Integration of Heterogeneous Databases without Common Domains Using Queries Based on Textual Similarity", Proceedings of ACM SIGMOD `98, Seattle 1998 beschrieben sind.

Bei Programmpunkt 54 wird für jedes neue Objekt, für das noch keine Werte in der Ergebnisliste abgespeichert sind, eine neue Zugriffsstruktur entsprechend Figur 16 angelegt.

Bei Programmpunkt 55 werden für alle neu ausgewählten Objekte die Werte der Eigenschaften in der Ergebnisliste im Datenspeicher 6 abgelegt. Zudem werden für jedes Objekt die Werte von Eigenschaften, die noch nicht erfaßt wurden, mit dem niedrigsten bisher vorgekommenen Wert der Eigenschaft abgeschätzt. Anschließend wird die Wertzahl (aggregierter Score) mit der Kombinationsfunktion F berechnet und in die Zugriffsstruktur eingetragen.

Bei Programmpunkt 56 überprüft die Auswahleinrichtung 4, ob k Objekte vollständig bekannt sind, d.h., ob k Objekte für alle zu betrachtenden Eigenschaften tatsächlich ermittelte und nicht geschätzte Werte für die Eigenschaften aufweisen. Ist dies nicht der Fall, so wird nach Programmpunkt 52 zurückverzweigt.

Ergibt die Abfrage jedoch bei Programmpunkt 56, daß k Objekte bereits vollständig in den betrachteten Eigenschaften bekannt sind, so wird nach Programmpunkt 57 verzweigt.

Bei Programmpunkt 57 werden alle Daten über die Objekte aus der Ergebnisliste entfernt, die eine Wertzahl S aufweisen, bei der mindestens ein abgeschätzter Wert einer Eigenschaft berücksichtigt wurde, und die zudem kleiner gleich der Wertzahl des kleinsten vollständig bekannten Objektes ist. Sollten für k+1 Objekte Werte für alle Eigenschaften in der Ergebnisliste abgelegt sein, d.h. k+1 Objekte vollständig bekannt sein, dann wird auch das Objekt mit der kleinsten Wertzahl aus der Ergebnisliste entfernt. Anschließend wird zu Programmpunkt 58 verzweigt.

Bei Programmpunkt 58 wird überprüft, ob mehr als k Objekte in der Ergebnisliste abgelegt sind. Ist dies nicht der Fall, so werden anschließend bei Programmpunkt 59 die k vollständig bekannten Objekte von der Auswahleinrichtung 4 über die Formatiereinrichtung 5 an die Ein/Ausgabeeinrichtung 1 als die k Objekte ausgegeben, die dem vorgegebenen Objekt am besten ähneln.

Ergibt die Abfrage bei Programmpunkt 58, daß mehr als k Objekte bekannt sind, dann wird zu Programmpunkt 60 verzweigt.

Bei Programmpunkt 60 wählt die Auswahleinrichtung 4 aus allen Datenlisten eine vorgegebene Anzahl neuer Objekte aus, die die höchsten Werte für die Datenliste (Eigenschaften) aufweisen und die bisher noch nicht für diese Datenliste (Eigenschaft) ausgewählt wurden. Die Werte der neu ausgewählten Objekte werden bei Programmpunkt 61 in analoger Weise zu Programmpunkt 53 einem Objekt über eine vorgebbare Abgleichfunktion zugeordnet und in die Ergebnisliste im Datenspeicher 6 eingeschrieben. Die Werte der Eigenschaften der neu ausgewählten Objekte, die nicht einem bereits in der Ergebnisliste abgelegten Objekt zugeordnet werden können, werden verworfen und nicht weiter verwendet.

Unter Verwendung der bei Programmpunkt 61 neu abgelegten Werte der Eigenschaften werden die nicht bekannten Werte der Eigenschaften der in der Ergebnisliste abgelegten Objekte entsprechend Programmpunkt 55 mit den bekannten, minimalen Werten der Eigenschaften abgeschätzt und in die Ergebnisliste eingetragen. Gleichzeitig werden unter Verwendung der neu in die Ergebnisliste eingeschriebenen Werte die Wertzahlen S entsprechend Programmpunkt 55 berechnet.

Bei den Programmpunkten 60,61 und 57 werden keine neuen Objekte in die Ergebnisliste eingetragen, sondern nur neue Werte bereits in der Ergebnisliste abgelegter Objekte aus den Datenlisten geholt und für die weitere Abschätzung verwendet. Anschließend wird zu Programmpunkt 57 verzweigt.

Im folgenden wird anhand eines Beispiels der dritte Algorithmus nach Fig. 13 näher erläutert: In dem beschriebenen Beispiel sollen zwei Objekte (k=2) in der Datenbank gefunden werden, die am besten zu einem vorgegebenen Objekt mit vorgegebenen Eigenschaften Textur und Farbe und der Kombinationsfunktion F passen. Die Kombinationsfunktion F ist das arithmetische Mittel aus der Textur und der Farbe. Das vorgegebene Objekt mit den vorgegebenen Eigenschaften und der Kombinationsfunktion entspricht dem vorgegebenen Objekt des ersten Algorithmus.

In Fig. 14 und 15 sind die Datenlisten dargestellt, die bei Programmpunkt 51 von der Datenbank 3 an die Auswahleinrichtung 4 gegeben werden.

Bei Programmpunkt 52 wird das Objekt o1 und o2 mit dem jeweils größten Wert der Eigenschaft Textur bzw. Farbe in die Ergebnisliste eingetragen. Dabei wird für jedes Objekt die Kennung und der Wert der Eigenschaft eingetragen. Anschließend werden die Objekte o1 und o4 entsprechend den Programmpunkten 53, 54 und 55 bearbeitet und die Wertzahl S (aggregierter Score) in die Zugriffsstruktur entsprechend Fig. 16 eingeschrieben.

Anschließend ergibt die Abfrage bei Programmpunkt 56, daß noch keine k Objekte vollständig bekannt sind. Folglich werden die weiteren zwei Objekte o2, o5 bei Programmpunkt 52 aus den Datenlisten der Figuren 14, 15 geholt und mit der Kennung und dem Wert der Eigenschaft in die Ergebnisliste eingetragen. Unter Abarbeitung der Programmpunkte 53, 54 und 55 wird die Wertzahl S für jedes Objekt berechnet und in die Zugriffsstruktur nach Fig. 17 eingeschrieben.

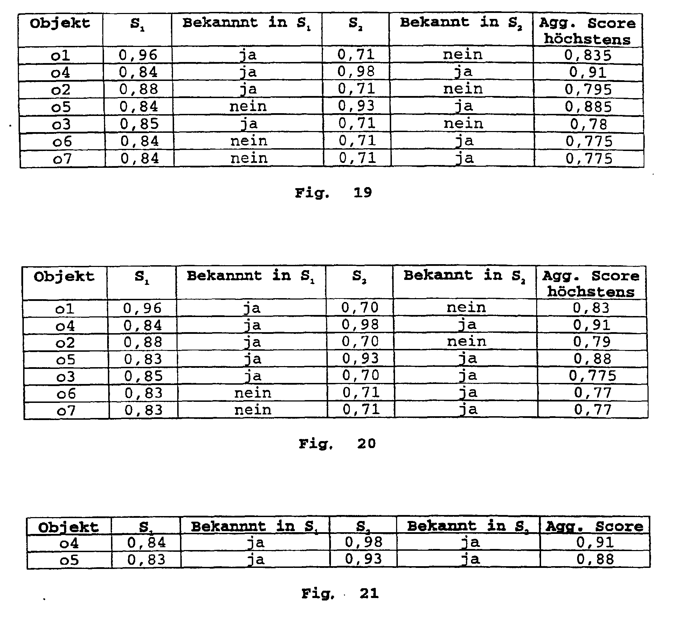

Die Abfrage bei Programmpunkt 56 ergibt wieder, daß noch nicht k Objekte ganz bekannt sind. Insofern werden bei Programmpunkt 52 die weiteren Objekte o3,o6 aus den Datenlisten geholt und mit der Kennung und den Werten für die Eigenschaften in die Ergebnisliste eingetragen. Entsprechend den Programmpunkten 53, 54 und 55 wird für die neu ausgewählten Objekte die Wertzahl S berechnet und in die Zugriffsstruktur nach Fig. 18 eingeschrieben.

Die folgende Abfrage bei Programmpunkt 56 ergibt wieder, daß nicht k Objekte ganz bekannt sind, so daß erneut nach Programmpunkt 52 verzweigt wird und das Objekt o4 aus der ersten Datenliste (Fig.14) und das Objekt o7 aus der zweiten Datenliste (Fig.15) ausgewählt werden und mit den Werten für die Eigenschaften in die Ergebnisliste eingeschrieben werden. Daraufhin werden die Programmpunkte 53, 54 und 55 abgearbeitet, die Wertzahlen S für für das Objekt o4 und o7 berechnet und in die Zugriffsstruktur entsprechend Fig. 19 eingeschrieben.

Die folgende Abfrage bei Programmpunkt 56 ergibt zwar, daß ein Objekt o4 vollständig bekannt ist. Da jedoch zwei beste Objekte (k=2) ermittelt werden sollen, sind wieder nicht alle k Objekte vollständig bekannt, so daß zu Programmpunkt 52 zurückverzweigt wird.

Bei Programmpunkt 52 werden als nächstes das Objekt o5 aus der ersten Datenliste (Fig.14) und das Objekt o3 aus der zweiten Datenliste (Fig.15) ausgelesen und mit den Eigenschaften in die Ergebnisliste eingetragen. Unter Abarbeitung der Programmpunkte 53, 54 und 55 werden die Wertzahlen S für das Objekt o5 und o3 erneut berechnet und in die Zugriffsstruktur entsprechend Fig. 20 eingeschrieben.

Die folgende Abfrage bei Programmpunkt 56 ergibt, daß drei Objekte (o4,o5,o3) vollständig in der Ergebnisliste bekannt sind. Damit wird nach Programmpunkt 57 verzweigt. Bei Programmpunkt 57 werden die Objekte entfernt, bei denen die Wertzahl (aggregierter Score) mindestens mit einem geschätzten Wert ermittelt wurde und die Wertzahl kleiner als die kleinste Wertzahl eines vollständig bekannten Objektes ist. Dabei werden alle Objekte außer den Objekten o4 und o5 aus der Ergebnisliste gestrichen.

Es verbleiben somit die Objekte o4,o5 als die Objekte, die nach Abarbeitung der Programmpunkte 58 und 59 als Ergebnis der Abfrage ausgegeben werden.

Ein Vorteil des dritten Algorithmus besteht darin, daß insbesondere bei heterogenen Informationssystemen zeitaufwendige direkte Zugriffe vermieden werden. Dadurch wird ein schnellerer Suchalgorithmus realisiert.

Es wird im folgenden ein vierter Algorithmus beschrieben, mit dem in effizienter Weise Objekte gesucht werden können, die einem vorgegebenen Objekt (Musterobjekt) am besten ähneln.

Der vierte Algorithmus besteht im wesentlichen aus zwei Phasen. In der ersten Phase werden neue Objekte in die Ergebnisliste eingeschrieben und mit den anderen Objekten abgeglichen. Wie in Fagins Algorithmus kann vorzugsweise nach dem Auftreten der ersten $k$ Elemente für alle Eigenschaften in der Ergebnisliste mit der zweiten Phase begonnen werden. Doch müssen im Gegensatz zu Fagins Algorithmus in dieser keine zeitaufwendigen direkte Zugriffe auf die Objekte der Datenbank erfolgen, sondern die Ergebnisliste muß für die Eigenschaften nur noch bis zu bestimmten, geometrisch abgeschätzten Grenzwerten mit Objekten erweitert werden, die Objekte gegenseitig abgeglichen und die Wertzahlen berechnet werden, um eine Korrektheit der besten Objekte zu garantieren.

Die Abschätzung der Grenzwerte $S_{xi}$ wird geometrisch durch Berechnung einer Niveauhyperfläche der Kombinationsfunktion F bestimmt. Dazu müssen *n* Gleichungen:

$$F(S_{x1},1,...,1) = Co,$$

$$F(1,S_{x2},1,...,1) = Co,$$

.

.

.

$$F(1,...,1,S_{xn}) = Co,$$

aufgelöst werden, wobei $C_0=F(S_1,...,S_n)$ mit $(S_1,...,S_n)$ die innere Ecke des Cuboids bezeichnet, welche die *k* ersten vollständig zu betrachtenden Objekte umschließt. Diese Gleichungen lassen sich für fast alle in der Praxis verwendeten Kombinationsfunkionen, wie z.B. gewichtete arithmetische Mittel, im Intervall $[0,1]^n$ auflösen. Wieder wird eine Ergebnisliste und eine Zugriffsstruktur wie im dritten Algorithmus benötigt.

Die Werte $(S_1,...,S_n)$ entsprechen den Werten der Eigenschaften des Objektes der Ergebnisliste, das die kleinste Wertzahl aufweist und von dem alle Werte der Eigenschaften bekannt sind. In einer anderen Ausführungsform entsprechen die Werte $(S_1,...,S_n)$ den kleinsten Werte der Eigenschaften, die in der Ergebnisliste abgelegt sind, d.h. den kleinsten bekannten Werten der Eigenschaften. Der Wert $C_0$ entspricht der Wertzahl (aggregierter Score) des kleinsten Objektes, dessen Eigenschaften alle bekannt sind und in der Ergebnisliste abgelegt sind.

Ohne jedesmal einen direkten Zugriff auf die Datenbank machen zu müssen, wird das in der Ergebnisliste neu aufgetretene Objekt mit den bisher für die anderen Eigenschaften in der Ergebnisliste aufgetretenen Objekten verglichen, was im wesentlichen einer Hauptspeicheroperation mit geringer Komplexität entspricht. Wenn *k* Objekte bereits für alle anderen Eigenschaften in der Ergebnisliste auftreten, müssen als zweiter Schritt abhängig von der Kombinationsfunktion F für alle Eigenschaften die Objekte aus den Datenlisten in die Ergebnisliste geladen werden, deren Wertzahlen größer als die Wertzahlen der zuvor berechneten Grenzwerte $S_{x1}$ bis $S_{xn}$ sind.

Anschließend werden die neu in die Ergebnisliste eingeschriebenen Objekte mit den bereits abgelegten Objekten abgeglichen. Alle Objekte, die in der Ergebnisliste für alle Eigenschaften bekannt sind, werden nach ihren Wertzahlen geordnet und die ersten *k* Objekte können als Ergebnis der Suche ausgegeben werden.

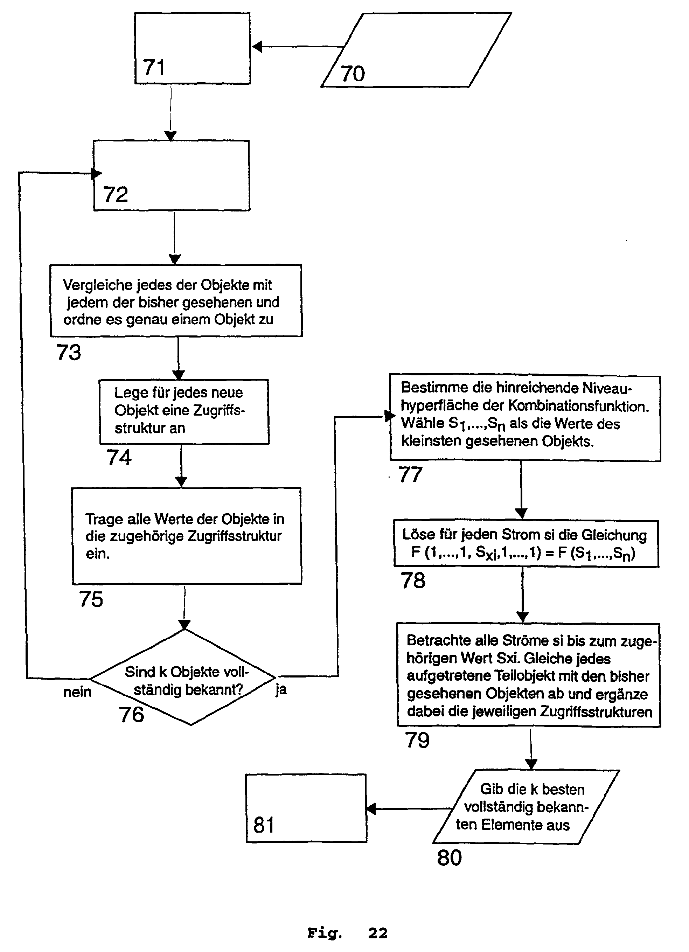

Figur 22 zeigt ein Ablaufdiagramm des vierten Algorithmus, mit dem eine vorgegebene Anzahl k von Objekten aus einer Datenbank ermittelt wird, die einem vorgegebenen Objekt (Musterobjekt) am besten ähneln.

Bei Programmpunkt 70 werden für das vorgegebene Objekt (Musterobjekt) n vorgebbare Eigenschaften und eine Kombinationsfunktion F über die Ein-/Ausgabeeinrichtung 1 eingegeben. Das vorgegebene Objekt, die vorgebbaren Eigenschaften und die Kombinationsfunktion F entsprechen denen des zweiten Algorithmus nach Figur 3.

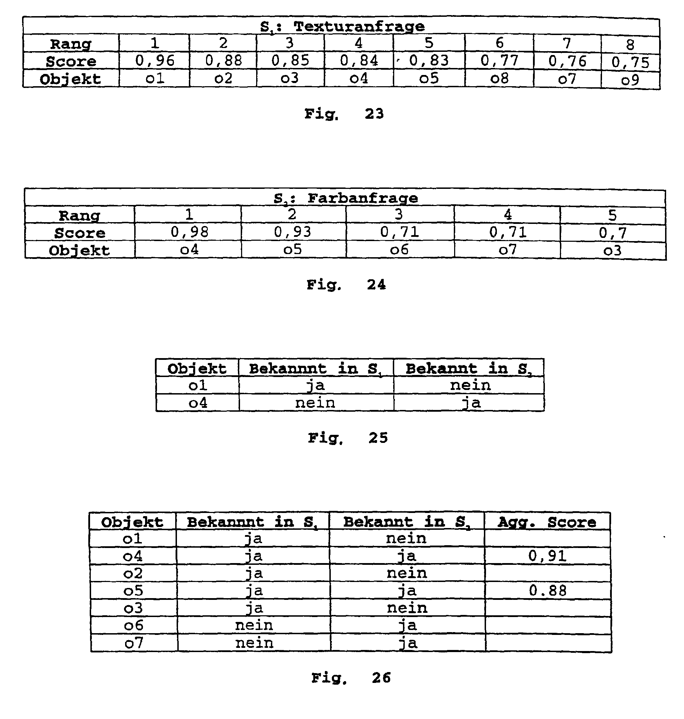

Daraufhin ermittelt die Suchmaschine 2 aus der Datenbank 3 bei Programmpunkt 71 für die Eigenschaften Textur und Farbe jeweils eine Datenliste, die in den Figuren 23 und 24 dargestellt sind. Die Objekte sind nach absteigendem Wert der Eigenschaften sortiert. Die Datenlisten werden der Auswahleinrichtung 4 zugeführt.

Bei Programmpunkt 72 wählt die Auswahleinrichtung 4 aus den zugeführten Datenlisten eine vorgebbare Anzahl m von Objekten aus jeder Datenliste aus, die die größten Werte der Datenliste (Eigenschaften) aufweisen und deren Werte für diese Datenliste noch nicht in eine Ergebnisliste in den Datenspeicher 6 eingetragen wurden. Die Werte der Eigenschaften und die Kennungen der Objekte werden anschließend im Datenspeicher 6 in der Ergebnisliste abgespeichert.

Beim folgenden Programmpunkt 73 vergleicht die Auswahleinrichtung 4 die neu in die Ergebnisliste eingetragenen Objektkennungen mit jedem der bereits in der Ergebnisliste abgelegten Objektkennungen und entscheidet über eine Abgleichfunktion, welche Objektkennungen von verschiedenen Datenlisten zu einem einzigen Objekt gehören. Der Abgleich wird mit der gleichen Funktion wie bei Programmpunkt 53 des dritten Algorithmus in Figur 13 durchgeführt.

Dieser Abgleich ist insbesondere bei heterogenen Informationssystemen notwendig, da bei diesen Informationssystemen eine Zuordnung der Objekte zueinander über die Kennung nicht von vornherein eindeutig gegeben ist.

Bei Programmpunkt 74 wird für jedes neue Objekt, für das noch keine Werte in der Ergebnisliste abgelegt sind, eine neue Zugriffsstruktur entsprechend Figur 25 angelegt, in der die Kennung des Objektes und die Information abgelegt ist, welche Eigenschaft des Objektes bekannt ist.

Bei Programmpunkt 75 schreibt die Auswahleinrichtung 4 alle bei Programmpunkt 73 neu gelesenen Werte der Eigenschaften des neuen Objektes in die Zugriffsstruktur ein.

Anschließend überprüft die Auswahleinrichtung 4 bei Programmpunkt 76, ob für k Objekte in allen zu betrachtenden Eigenschaften Werte bekannt sind. Ist dies nicht der Fall, so wird nach Programmpunkt 72 zurückverzweigt.

Ergibt die Abfrage bei Programmpunkt 76, daß für k Objekte alle Werte der betrachteten Eigenschaften in der Ergebnisliste bekannt sind, d.h. k Objekte vollständig bekannt sind, so wird nach Programmpunkt 77 verzweigt. Anstelle der Anzahl k kann auch eine andere Anzahl als Kriterium verwendet werden, um zu Programmpunkt 77 zu verzweigen.

Bei Programmpunkt 77 bestimmt die Auswahleinrichtung 4 die Wertgrenzen durch die Bildung einer Niveauhyperfläche, um sicher zu gehen, daß ausreichend Objekte betrachtet werden, damit eine sichere Aussage über die besten Objekte getroffen werden kann. Die Auswahleinrichtung 77 wählt dazu die Werte des in der Ergebnisliste abgelegten Objektes mit der kleinsten Wertzahl zur Bestimmung der hinreichenden Niveauhyperfläche aus. Anschließend wird für die Werte des ausgewählten kleinsten Objektes bei Programmpunkt 78 das oben beschriebene Gleichungssystem mit n Gleichungen für die Kombinationsfunktion F gelöst.

Daraufhin werden von der Auswahleinrichtung 4 bei Programmpunkt 79 alle Objekte der Datenlisten bis zum zugehörigen Wert $S_{xi}$ ausgewählt und die Objekte mit den Werten größer als der Grenzwert $S_{xi}$ in die Ergebnisliste eingeschrieben. Dabei werden die neu eingeschriebenen Objekte entsprechend dem Programmpunkt 73 mit den bisher gesehenen Objekten abgeglichen und jedes Objekt eindeutig einem Objekt zugeordnet.

Anschließend ermittelt die Auswahleinrichtung 4 bei Programmpunkt 80 aus den in der Ergebnisliste abgelegten Objekten die k besten vollständig bekannten Objekte und gibt diese bei Programmpunkt 81 über die Formatiereinrichtung 5 und die Ein-/Ausgabeeinrichtung 1 als k beste Objekte aus.

Im folgenden wird anhand eines Zahlenbeispieles der vierte Algorithmus nach Fig. 22 näher erläutert: Fig. 23 zeigt eine Datenliste für die Eigenschaft Textur und Fig. 24 eine Datenliste für die Eigenschaft Farbe, die von der Suchmaschine 2 ermittelt werden und der Auswahleinrichtung 4 übergeben werden.

In diesem Ausführungsbeispiel sollen die zwei besten Objekte der Datenbank gefunden werden (k = 2), die in Bezug auf die Textur und die Farbe eines vorgegebenen Objektes am besten passen, das dem Objekt des ersten Algorithmus der Figur 3 entspricht.

Nacheinander werden entsprechend den Programmpunkten 72 bis 76 die Objekte o1 und o4 aus den Datenlisten der Figuren 23,24 ausgelesen und in eine Ergebnisliste im Datenspeicher 6 eingeschrieben. In der Ergebnisliste ist die Kennung des Objektes und der Wert der Eigenschaft des Objektes abgelegt. Zudem wird eine Zugriffsstruktur entsprechend Fig. 25 im Datenspeicher 6 abgelegt. In der Zugriffsstruktur wird eine Kennung für das Objekt, die Wertzahl (aggregierter Score) des Objektes und die Information abgelegt, welche Eigenschaft des Objektes bekannt ist.

Da noch keine k Objekte vollständig bekannt sind, ergibt die Abfrage bei Programmpunkt 76, daß nach Programmpunkt 72 zurückverzweigt wird und weitere Objekte abwechselnd aus beiden Datenlisten ausgewählt werden und entsprechend der Programmpunkte 73,74 und 75 bearbeitet und in den Datenspeicher 6 eingeschrieben werden, bis für k Objekte die Werte für die Eigenschaft Textur und Farbe in der Ergebnisliste abgelegt sind. Figur 26 zeigt diesen Status anhand der Zugriffsstruktur. Aus Fig.26 ist ersichtlich, daß die Eigenschaften der Objekte o4,o5 vollständig bekannt sind, so daß nach der Programmabfrage bei Programmpunkt 76 nach Programmpunkt 77 verzweigt wird.

Die hinreichende Niveaulinie kann demnach bei Programmpunkt 78 bestimmt werden. Dazu müssen, wie oben beschrieben, die n Gleichungen für die Kombinationsfunktion F gelöst werden

Für das beschriebene Ausführungsbeispiel ergeben sich folgende Werte:

$$\tfrac{1}{2} ( S_{x1} + 1 ) = 0.88$$

und

$$\tfrac{1}{2} ( 1 + S_{x2} ) = 0.88,$$

wobei der Wert 0.88 für Co die Wertzahl (aggregierter Score) des Objektes o5 ist, das das Objekt der Ergebnisliste darstellt, das die kleinste Wertzahl aufweist und dessen Werte für alle Eigenschaften bekannt sind.

Als Ergebnis folgt: $S_{x1} = S_{x2} = 0.76$.

Daraus folgt, daß beim folgenden Programmpunkt 79 aus beiden Datenlisten alle Objekte mit Werten größer als 0.76 in die Ergebnisliste geschrieben werden müssen und bei der Suche nach den besten Objekten berücksichtigt werden müssen.

Aus der Datenliste $s_2$ wurde schon das Objekt o7 mit dem Wert 0.71 in die Ergebnisliste geschrieben, also müssen aus dieser Datenliste keine weiteren Objekte berücksichtigt werden. Es kann nur noch in der Datenliste $s_1$ ein entsprechendes Objekt vorhanden sein, das berücksichtigt werden muß. Das nächste Objekt o8 in der Datenliste $s_1$ hat einen Wert von 0.77. Da es aber in der Datenliste $s_2$ bis zum Wert 0.76 nicht aufgetreten ist, kann es verworfen werden. Das darauffolgende Objekt o7 hat den Wert 0.76. Da das Objekt o7 bereits aus der Datenliste $s_2$ in die Ergebnisliste übertragen wurde, muß seine Wertzahl S werden: S = 0.735. Damit ist die Wertzahl von Objekt o7 kleiner als die Wertzahlen von o4 und o5. Damit kann das Objekt o7 nicht zu den zwei besten Objekten gehören. Das nächste Objekt aus $s_1$ ist das Objekt o9 mit einem Wert von 0.75 und liegt damit außerhalb der Grenze von 0,77, die über die Niveauhyperfläche berechnet wurde. Damit ist das Objekt o9 nicht mehr zu berücksichtigen.

Wir haben also in beiden Datenlisten bis zum Wert 0.76 nur drei Objekte vollständig gesehen, von denen die zwei besten (o4, o5) als beste zwei Objekte der ganzen Datenbank bei Programmpunkt 81 ausgegeben werden können.

Die erfindungsgemäßen Verfahren sind vorzugsweise auf einem Speichermedium abgespeichert, das von einem Computer gelesen werden kann, so daß der Computer die Verfahren abarbeiten kann. Eine einfache Realisierung der Vorrichtung zur Durchführung der Verfahren besteht in einem Computer, der die in Figur 1 dargestellten Programmblöcke entweder in Hardware und/oder in Software realisiert aufweist.

Die Kombinationsfunktion F kann je nach Musterobjekt und der Art der vorgegebenen Informationssysteme optimiert werden, um ein möglichst gutes Suchergebnis zu erhalten. Die Kombinationsfunktion erlaubt eine Gewichtung der Eigenschaften, die individuell eingegeben werden kann.

## Patentansprüche

1.  Verfahren zum Ermitteln einer vorgebbaren Anzahl k von Objekten aus einer Vielzahl von Objekten, die einem hinsichtlich mehrerer Eigenschaften vorgegebenen Musterobjekt am besten ähneln, bei dem eine Kombinationsfunktion zur Bewertung der Eigenschaften vorgegeben ist, wobei für jede Eigenschaft eine Anzahl von Objekten ausgewählt wird, deren Werte für die Eigenschaft am größten sind, dadurch gekennzeichnet, daß für jedes ausgewählte Objekt unter Verwendung der Werte der Eigenschaft und der Kombinationsfunktion eine Wertzahl berechnet wird, und daß für die Auswahl der ähnlichsten Objekte nur die Objekte betrachtet werden, deren Wertzahl über einer vorgebbaren Vergleichszahl liegt.

2.  Verfahren zum Ermitteln einer vorgebbaren Anzahl k von Objekten aus einer Vielzahl von Objekten, die einem hinsichtlich mehrerer Eigenschaften vorgegebenen Musterobjekt am besten ähneln, wobei eine Kombinationsfunktion zur Bewertung der Eigenschaft vorgegeben ist, wobei für jede Eigenschaft eine Anzahl von Objekten ausgewählt wird, deren Werte für die Eigenschaft am größten sind, dadurch gekennzeichnet, daß für jedes ausgewählte Objekt unter Verwendung des Wertes der Eigenschaft und der Kombinationsfunktion eine Wertzahl berechnet wird, daß unter Verwendung des Wertes der Eigenschaft der ausgewählten Objekte und der Kombinationsfunktion ein Grenzwert für den Wert der Eigenschaft berechnet wird, und daß für die weitere Auswahl der ähnlichsten Objekte die Objekte aus der Vielzahl der Objekte und aus der Menge der ausgewählten Objekte betrachtet werden, deren Wert der Eigenschaft über dem berechneten Grenzwert liegt.

3.  Verfahren nach Anspruch 2, dadurch gekennzeichnet, daß zur Berechnung des Grenzwertes die Werte der Eigenschaften des ausgewählten Objektes verwendet werden, das die kleinste Wertzahl aufweist.

4.  Verfahren nach Anspruch 3, dadurch gekennzeichnet, daß zur Berechnung der Grenzwerte ($S_{xi}$) das folgende Gleichungssystem mit n Gleichungen für die Kombinationsfunktion F gelöst werden:

$$F(S_{x1}, 1, ..., 1) = C_0,$$

$$F(1, S_{x2}, 1, ..., 1) = C_0,$$

$$.$$

$$.$$

$$.$$

$$F(1, ..., 1, S_{xn}) = C_0,$$

wobei $C_0 = F(S_1, ..., S_n)$ und die Werte $(S_1, ..., S_n)$ den Werten der Eigenschaften des ausgewählten Objektes entsprechen, das die kleinste Wertzahl aufweist oder die Werte $(S_1, ..., S_n)$ den kleinsten Werten der Eigenschaften entsprechen, die in der Ergebnisliste abgelegt wurden.

5. Verfahren nach Anspruch 1, dadurch gekennzeichnet, daß die Vergleichszahl mit der Kombinationsfunktion berechnet wird, wobei der jeweils kleinste Wert einer Eigenschaft verwendet wird, der bei den ausgewählten Objekten aufgetreten ist.

6. Verfahren nach einem der Ansprüche 1 bis 5, dadurch gekennzeichnet, daß für die ausgewählten Objekte, für die ein Wert einer Eigenschaft noch nicht bekannt ist, durch den kleinsten Wert der Eigenschaft abgeschätzt wird, den ein ausgewähltes Objekt aufweist.

7. Verfahren nach einem der Ansprüche 1 bis 6, dadurch gekennzeichnet, daß die Anzahl der ausgewählten Objekte, deren Werte für die Eigenschaften vollständig bekannt sind, mindestens der Anzahl k der gesuchten Objekte entspricht, bevor eine Entscheidung über die besten Objekte getroffen wird.

8. Verfahren zum Ermitteln einer vorgebbaren Anzahl k von Objekten aus einer Vielzahl von Objekten, die einem hinsichtlich mehrerer Eigenschaften vorgegebenen Musterobjekt, mit größter Ähnlichkeit entsprechen, wobei für die Bewertung der Eigenschaften eine Kombinationsfunktion vorgegeben ist,
mit folgenden Verfahrensschritten:

1) für jede Eigenschaft wird eine vorgebbare Anzahl von Objekten ausgewählt, die die höchsten Werte für die Eigenschaft haben,
2) für jedes ausgewählte Objekt werden die Werte für die Eigenschaften ermittelt, die noch nicht für das Objekt bekannt sind,
3) für jedes ausgewählte Objekt wird anhand der Werte für die Eigenschaften eine Wertzahl mit der Kombinationsfunktion F ermittelt,
4) die Wertzahlen der ausgewählten Objekte werden mit einer vorgegebenen Vergleichszahl verglichen,
5) die Objekte, deren Wertzahlen größer als die Vergleichszahl ist, werden als Ergebnis ausgegeben,
6) sind nach diesem Vergleich noch nicht k Objekte ausgegeben, so wird für eine Eigenschaft ein neues Objekt ausgewählt, das den größten Wert der Eigenschaft aufweist und noch nicht für diese Eigenschaft ausgewählt wurde, anschließend wird mit Verfahrensschritt 2 weiter verfahren,
7) die Verfahrensschritte 2 bis 7 werden so oft abgearbeitet, bis k Objekte bekannt sind, deren Wertzahlen größer als die Vergleichszahl ist.

9. Verfahren nach Anspruch 8, dadurch gekennzeichnet, daß für alle Eigenschaften der jeweils kleinste Wert eines ausgewählten Objektes ermittelt wird, und daß die Vergleichszahl unter Verwendung der kleinsten Werte mit der Kombinationsfunktion ermittelt wird.

10. Verfahren nach einem der Ansprüche 8 oder 9, dadurch gekennzeichnet, daß für jede Eigenschaft ein Änderungswert ermittelt wird, der ein Maß für das Abnehmen des Wertes der Eigenschaft über die Reihenfolge der Objekte darstellt, und daß in Verfahrensschritt 7 aus der Eigenschaft ein neues noch nicht für diese Eigenschaft ausgewähltes Objekt ausgewählt wird, die den größten Änderungswert aufweist.

11. Verfahren nach einem der Ansprüche 8 bis 10, dadurch gekennzeichnet,

daß nach Verfahrensschritt 7 und vor Verfahrensschritt 2 die kleinsten Werte der ausgewählten Objekte für die Eigenschaften ermittelt werden,
daß aus den ermittelten kleinsten Werten der Eigenschaften unter Verwendung des Wertes des neu ausgewählten Objektes eine Vergleichszahl mit der Kombinationsfunktion ermittelt wird,
daß die Wertzahlen der ausgewählten Objekte mit der Vergleichszahl verglichen werden,
daß die Objekte, deren Wertzahlen größer als die Vergleichszahl ist, als Ergebnis ausgegeben werden, und
daß mit Verfahrensschritt 2 weiter gearbeitet wird, wenn noch nicht k Objekte ausgegeben wurden.

12. Verfahren zum Ermitteln einer vorgebbaren Anzahl k von Objekten aus einer Vielzahl von Objekten, die einem hinsichtlich mehrerer Eigenschaften vorgegebenen Musterobjekt, mit größter Ähnlichkeit entsprechen, wobei für die Bewertung der Eigenschaften eine Kombinationsfunktion vorgegeben ist, mit folgenden Verfahrensschritten:

1) für jede Eigenschaft wird eine vorgebbare Anzahl von Objekten ausgewählt, die die höchsten Werte für die Eigenschaft haben,

2) für jedes ausgewählte Objekt werden alle vorgegebenen Eigenschaften, die bei Verfahrensschritt 1 nicht gefunden wurden, mit dem niedrigsten Wert abgeschätzt, den ein ausgewähltes Objekt für die entsprechende Eigenschaft aufweist,

3) für jedes ausgewählte Objekt wird anhand der Werte für die bekannten und die abgeschätzten Eigenschaften eine Wertzahl nach der Kombinationsfunktion ermittelt,

4) ist eine Anzahl k von Objekten in allen Eigenschaften bekannt, dann werden die Objekte verworfen, von denen mindestens ein Wert für eine Eigenschaft geschätzt ist und deren Wertzahl kleiner ist als die kleinste Wertzahl eines bekannten Objektes und anschließend wird zu Verfahrensschritt 6 verzweigt,

5) ist nicht eine Anzahl k von Objekten in allen Eigenschaften bekannt, dann wird ein neues Objekt für mindestens eine Eigenschaft gewählt und nach Verfahrensschritt 2 verzweigt

6) ist eine Anzahl von k Objekten in allen Eigenschaften bekannt, dann wird ein neuer Wert einer Eigenschaft, der für die Eigenschaft am größten ist und noch nicht ausgewählt wurde, ausgewählt, anschließend wird überprüft, ob das Objekt, dessen Wert ausgewählt wurde, bereits für eine andere Eigenschaft ausgewählt wurde, ist dies der Fall, dann wird mit Programmschritt 7 weiter verfahren, ist dies nicht der Fall, dann wird der neu ausgewählte Wert verworfen und Verfahrensschritt 6 wiederholt,

7) werden bei der Erweiterung nach Verfahrensschritt 6) alle Werte der Eigenschaften eines ausgewähltes Objektes bekannt, dann wird das vollständig bekannte Objekt mit der kleinsten Wertzahl verworfen,

8) weiterhin wird jedes Objekt entfernt, dessen Wertzahl nicht vollständig bekannt ist und dessen Wertzahl kleiner ist als die kleinste Wertzahl der Objekte, deren Werte für alle Eigenschaften bekannt sind,

9) die Verfahrensschritte 6 bis 8 werden so oft durchlaufen, bis für k ausgewählte Objekte alle Eigenschaften ohne Schätzwerte bekannt sind, und deren Wertzahlen größer sind als die größte Wertzahl eines nicht vollständig bekannten Objektes.

13. Verfahren zum Ermitteln einer vorgebbaren Anzahl k von Objekten aus einer Vielzahl von Objekten, die einem vorgegebenen Musterobjekt, mit größter Ähnlichkeit entsprechen, wobei für das Musterobjekt mindestens eine Eigenschaft vorgegeben ist und für die Bewertung der Eigenschaft eine Kombinationsfunktion vorgegeben ist, mit folgenden Verfahrensschritten:

1) für jede Eigenschaft wird eine vorgebbare Anzahl von Objekten ausgewählt, die die höchsten Werte für die Eigenschaft haben, bis mindestens die Anzahl k von Objekten in allen betrachteten Eigenschaften bekannt sind,

2) für jedes ausgewählte Objekt wird anhand der Werte für die Eigenschaften eine Wertzahl mit der Kombinationsfunktion ermittelt,

3) es wird das kleinste Objekt mit der kleinsten Wertzahl ermittelt,

4) aus den Werten der Eigenschaften des kleinsten Objektes oder aus den kleinsten in der Ergebnisliste abgelegten Werte der Eigenschaften werden über die Kombinationsfunktion Grenzwerte für die Eigenschaften ermittelt,

5) alle Objekte, deren Werte für die Eigenschaften über den Grenzwerten liegen, werden zusätzlich ausgewählt,

6) aus den ausgewählten Objekten wird die Anzahl k von Objekten ausgewählt, deren Wertzahl die größten sind.

14. Vorrichtung, insbesondere Computersystem, zur Durchführung eines Verfahrens nach einem der Ansprüche 1 bis 13.

15. Speichermedium, das Daten beinhaltet, die von einem Computer gelesen und ausgeführt werden können, dadurch gekennzeichnet, daß die Daten ein Verfahren nach einem der Ansprüche 1 bis 13 beschreiben.

Fig. 1

| Eigenschaft 1 | | | | ... | | Eigenschaft n | | |
|---|---|---|---|---|---|---|---|---|
| OID | Rang | Wert | | | | OID | Rang | Wert |
| o1 | 1 | 0,9 | | | | o2 | 1 | 0,6 |
| o2 | 2 | 0,8 | | | | o1 | 2 | 0,4 |
| o3 | 3 | 0,7 | | | | o5 | 3 | 0,2 |
| ... | ... | ... | | | | ... | ... | ... |

Fig. 2

Fig. 3

| $s_1$: Texturanfrage | | | | |
|---|---|---|---|---|
| Rang | 1 | 2 | 3 | . . . |
| Score | 0,96 | 0,88 | 0,85 | . . . |
| Objekt | o1 | o2 | o3 | . . . |

Fig. 4

| $s_2$: Farbanfrage | | | | |
|---|---|---|---|---|
| Rang | 1 | 2 | 3 | . . . |
| Score | 0,98 | 0,93 | 0,71 | . . . |
| Objekt | o4 | o5 | o6 | . . . |

Fig. 5

| Direkter Zugriff | Objekt | o1 | o4 | o2 | o5 | . . . |
|---|---|---|---|---|---|---|
| | Datenliste | $S_2$ | $S_1$ | $S_2$ | $S_1$ | . . . |
| | Score | 0.68 | 0.84 | 0.4 | 0.83 | . . . |

Fig. 6

| Abbruch-bedingung | Letztes Objekt | o1 | o4 | o2 | o5 |
|---|---|---|---|---|---|
| | agg.Score | 0,82 | 0,91 | 0,64 | 0,88 |
| | F(niedrigste Scores) | – | 0,965 | 0,94 | 0,905 |
| | $o_{top}$ | o1 | o4 | o4 | o4 |

Fig. 7

17

**31**

**32**

**33**

Berechne den Indikator

**43**

Sind alle Objekte vollständig bekannt?

nein — **34** — ja

Beschaffe die fehlenden Werte $s_i(o)$

**38**

Berechne
$V := F(s_1(r_1(z_1)),...,s_n(r_n(z_n)))$

**35**

Berechne
$S(o) = F(s_1(o),...,s_n(o))$

**39**

$| \{o \mid S(o) >= V\} | >= k ?$

ja — **36** — nein

**40**

Berechne
$V := F(s_1(r_1(z_1)),...,s_n(r_n(z_n)))$

**41**

**37**

$| \{o \mid S(o) >= V\} | >= k ?$

ja — **42** — nein

Ende

Fig. 8

| $s_1$: Texturanfrage | | | |
|---|---|---|---|
| Rang | 1 | 2 | 3 | ... |
| Score | 0,96 | 0,88 | 0,85 | ... |
| Objekt | o1 | o2 | o3 | ... |

Fig.  9

| $s_1$: Farbanfrage | | | |
|---|---|---|---|
| Rang | 1 | 2 | 3 | ... |
| Score | 0,98 | 0,93 | 0,71 | ... |
| Objekt | o4 | o5 | o6 | ... |

Fig.  10

| Direkter Zugriff | Objekt | o1 | o4 | o2 | o5 |
|---|---|---|---|---|---|
| | Datenliste | $S_2$ | $S_1$ | $S_2$ | $S_1$ |
| | Score | 0.68 | 0.84 | 0.4 | 0.83 |

Fig.  11

| Objekt | o1 | o4 | o2 | o5 |
|---|---|---|---|---|
| agg. Score | 0,82 | 0,91 | 0,64 | 0,88 |

Fig.  12

51

50

52

Vergleiche jedes der Objekte mit
jedem der bisher gesehenen und
ordne es genau einem Objekt zu

53

Lege für jedes neue
Objekt eine Zugriffsstruktur an

54

55

60

61

Sind k Objekte vollständig bekannt?

nein          ja

56

57

Sind mehr als k Objekte
bekannt ?

nein

58          ja

Gib die k vollständig
bekannten Elemente
aus

59

Fig. 13

| $S_1$: Texturanfrage | | | | | |
|---|---|---|---|---|---|
| Rang | 1 | 2 | 3 | 4 | 5 |
| Score | 0,96 | 0,88 | 0,85 | 0,84 | 0,83 |
| Objekt | o1 | o2 | o3 | o4 | o5 |

Fig. 14

| $S_2$: Farbanfrage | | | | | |
|---|---|---|---|---|---|
| Rang | 1 | 2 | 3 | 4 | 5 |
| Score | 0,98 | 0,93 | 0,71 | 0,71 | 0,7 |
| Objekt | o4 | o5 | o6 | o7 | o3 |

Fig. 15

| Objekt | $S_1$ | Bekannnt in $S_1$ | $S_2$ | Bekannt in $S_2$ | Agg. Score höchstens |
|---|---|---|---|---|---|
| o1 | 0,96 | ja | 0,98 | nein | 0,97 |
| o4 | 0,96 | nein | 0,98 | ja | 0,97 |

Fig. 16

| Objekt | $S_1$ | Bekannnt in $S_1$ | $S_2$ | Bekannt in $S_2$ | Agg. Score höchstens |
|---|---|---|---|---|---|
| o1 | 0,96 | ja | 0,93 | nein | 0,945 |
| o4 | 0,88 | nein | 0,98 | ja | 0,93 |
| o2 | 0,88 | ja | 0,93 | nein | 0,905 |
| o5 | 0,88 | nein | 0,93 | ja | 0,905 |

Fig. 17

| Objekt | $S_1$ | Bekannnt in $S_1$ | $S_2$ | Bekannt in $S_2$ | Agg. Score höchstens |
|---|---|---|---|---|---|
| o1 | 0,96 | ja | 0,71 | nein | 0,835 |
| o4 | 0,85 | nein | 0,98 | ja | 0,915 |
| o2 | 0,88 | ja | 0,71 | nein | 0,795 |
| o5 | 0,85 | nein | 0,93 | ja | 0,89 |
| o3 | 0,85 | ja | 0,71 | nein | 0,78 |
| o6 | 0,85 | nein | 0,71 | ja | 0,78 |

Fig. 18

| Objekt | $S_1$ | Bekannnt in $S_1$ | $S_2$ | Bekannt in $S_2$ | Agg. Score höchstens |
|--------|-------|------------------|-------|-----------------|---------------------|
| o1 | 0,96 | ja | 0,71 | nein | 0,835 |
| o4 | 0,84 | ja | 0,98 | ja | 0,91 |
| o2 | 0,88 | ja | 0,71 | nein | 0,795 |
| o5 | 0,84 | nein | 0,93 | ja | 0,885 |
| o3 | 0,85 | ja | 0,71 | nein | 0,78 |
| o6 | 0,84 | nein | 0,71 | ja | 0,775 |
| o7 | 0,84 | nein | 0,71 | ja | 0,775 |

Fig. 19

| Objekt | $S_1$ | Bekannnt in $S_1$ | $S_2$ | Bekannt in $S_2$ | Agg. Score höchstens |
|--------|-------|------------------|-------|-----------------|---------------------|
| o1 | 0,96 | ja | 0,70 | nein | 0,83 |
| o4 | 0,84 | ja | 0,98 | ja | 0,91 |
| o2 | 0,88 | ja | 0,70 | nein | 0,79 |
| o5 | 0,83 | ja | 0,93 | ja | 0,88 |
| o3 | 0,85 | ja | 0,70 | ja | 0,775 |
| o6 | 0,83 | nein | 0,71 | ja | 0,77 |
| o7 | 0,83 | nein | 0,71 | ja | 0,77 |

Fig. 20

| Objekt | $S_1$ | Bekannnt in $S_1$ | $S_2$ | Bekannt in $S_2$ | Agg. Score |
|--------|-------|------------------|-------|-----------------|-----------|
| o4 | 0,84 | ja | 0,98 | ja | 0,91 |
| o5 | 0,83 | ja | 0,93 | ja | 0,88 |

Fig. 21

**Fig. 22**

| $S_1$: Texturanfrage | | | | | | | | |
|---|---|---|---|---|---|---|---|---|
| Rang | 1 | 2 | 3 | 4 | 5 | 6 | 7 | 8 |
| Score | 0,96 | 0,88 | 0,85 | 0,84 | 0,83 | 0,77 | 0,76 | 0,75 |
| Objekt | o1 | o2 | o3 | o4 | o5 | o8 | o7 | o9 |

Fig. 23

| $S_2$: Farbanfrage | | | | | |
|---|---|---|---|---|---|
| Rang | 1 | 2 | 3 | 4 | 5 |
| Score | 0,98 | 0,93 | 0,71 | 0,71 | 0,7 |
| Objekt | o4 | o5 | o6 | o7 | o3 |

Fig. 24

| Objekt | Bekannnt in $S_1$ | Bekannt in $S_2$ |
|---|---|---|
| o1 | ja | nein |
| o4 | nein | ja |

Fig. 25

| Objekt | Bekannnt in $S_1$ | Bekannt in $S_2$ | Agg. Score |
|---|---|---|---|
| o1 | ja | nein | |
| o4 | ja | ja | 0,91 |
| o2 | ja | nein | |
| o5 | ja | ja | 0.88 |
| o3 | ja | nein | |
| o6 | nein | ja | |
| o7 | nein | ja | |

Fig. 26

**Europäisches Patentamt**

# EUROPÄISCHER RECHERCHENBERICHT

Nummer der Anmeldung

EP 00 10 2651

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | US 5 915 250 A (JAIN RAMESH ET AL) 22. Juni 1999 (1999-06-22) * Spalte 23, Zeile 65 - Spalte 25, Zeile 6; Abbildung 12 * | 1,2,7, 14,15 | G06F17/30 |
| A | * Spalte 25, Zeile 39 - Spalte 26, Zeile 58; Abbildung 14 * --- | 8,12,13 | |
| X | US 5 802 361 A (NORMILE JAMES ET AL) 1. September 1998 (1998-09-01) | 1,14,15 | |
| A | * Spalte 19, Zeile 33 - Spalte 22, Zeile 31 * ----- | 2,8,12, 13 | |

RECHERCHIERTE SACHGEBIETE (Int.Cl.7)

G06F

Der vorliegende Recherchenbericht wurde für alle Patentansprüche erstellt

| Recherchenort | Abschlußdatum der Recherche | Prüfer |
|---|---|---|
| DEN HAAG | 14. Juli 2000 | Fournier, C |

**ANHANG ZUM EUROPÄISCHEN RECHERCHENBERICHT
ÜBER DIE EUROPÄISCHE PATENTANMELDUNG NR.**          EP 00 10 2651

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

14-07-2000

| Im Recherchenbericht angeführtes Patentdokument | Datum der Veröffentlichung | Mitglied(er) der Patentfamilie | Datum der Veröffentlichung |
|---|---|---|---|
| US 5915250    A | 22-06-1999 | US    5913205 A<br>US    5911139 A<br>US    5893095 A<br>US    5983237 A | 15-06-1999<br>08-06-1999<br>06-04-1999<br>09-11-1999 |
| US 5802361    A | 01-09-1998 | KEINE | |

EPO FORM P0461

Für nähere Einzelheiten zu diesem Anhang : siehe Amtsblatt des Europäischen Patentamts, Nr. 12/82